# EUROPÄISCHE PATENTANMELDUNG

(11) **EP 2 216 605 A2**
(43) Veröffentlichungstag der Anmeldung: **11.08.2010**
(21) Anmeldenummer: 10090004.2
(22) Anmeldetag: 03.02.2010
(51) Int. Cl.: F24D 3/14

(54) **Vorrichtung zum fixieren von Rohren oder ähnlichen Gegenständen auf einem Untergrund**

(30) Priorität: 06.02.2009 DE 102009008029
(71) Anmelder: KERMI GmbH, 94447 Plattling (DE)
(72) Erfinder: Gerhard, Robert, 94574 Wallerfind (DE); Eberl, Markus, 94563 Otzing (DE); Schudy, Walter, 94569 Stephansposching (DE); Götz, Thomas, 94525 Metten (DE)
(74) Vertreter: Bressel, Burkhard

(57) **Zusammenfassung**

Die Erfindung betrifft eine Vorrichtung zum Fixieren von Rohren oder ähnlichen Gegenständen auf einem Untergrund, umfassend ein Gehäuse (1), in welchem ein Magazinhalter (2) zur Magazinierung von Halteklammern (10) sowie ein Schieber (3) zur Abtrennung und Ausgabe der Halteklammern (10) integriert sind, wobei der Schieber (3) über ein Betätigungselement (4) mit Handgriff (5) zum Fixieren der Rohre mittels der Halteklammern (10) aktivierbar ist, wobei ein System zur Speicherung der über den Handgriff (5) auf das Betätigungselement (4) ausgeübten Kraft vorgesehen ist, welches mit einem im Gehäuse (1) oberhalb des Schiebers (3) integrierten Rückhaltesystem (6) in einem funktionellen Zusammenhang steht, wobei über das Rückhaltesystem (6) eine auf das Betätigungselement (4) und den damit verbundenen Schieber (3) wirkende Rückhaltekraft einstellbar ist und der Schieber (3) bei Überwindung der Rückhaltekraft aktivierbar ist.

## Beschreibung

Die Erfindung betrifft eine Vorrichtung zum Fixieren von Rohren, Kabeln, Schläuchen etc. auf einem Untergrund bzw. einer Verlegungsfläche. Vorzugsweise handelt es sich dabei um so genannte Tacker- oder Setzgeräte zum Befestigen von Rohren auf einer Verlegungsfläche für Fußbodenheizungen. Vorrichtungen, mit welchen die Heizungsrohre mittels Halteclipsen oder Klammern auf einer Isolationsschicht befestigt werden, sind seit langem bekannt. Der sichere Halt der Klammern oder Clipse im Untergrund ist dabei meist durch deren Formgebung gegeben. Zum Einbringen der Halteclipse oder Klammern in den Isolationsuntergrund werden heute üblicherweise handbetätigte Tacker- oder Setzgeräte eingesetzt, wobei die Klammern in Magazinen gelagert sind, die mit der Vorrichtung in einem funktionalen Zusammenhang zur Vereinzelung und zum Auswurf der Klammern stehen. Derartige Vorrichtungen werden z.B. in den Druckschriften DE 31 29 818 C3, DE 87 06 929, DE 198 61 052, DE 3309475 A1, DE 199 33 340 A1, DE 202 01 020 U1, DE 20 2006 005 634 U1 beschrieben. Meist erfolgt der Auswurf der Klammern und deren Eindrücken in den Untergrund bei formschlüssiger Halterung der Rohre mit Hilfe einer federbelasteten Setzstange mit Handgriff. Da aber meist eine Vielzahl von derartigen Klammern in den Untergrund zur Befestigung der Rohre bei der Erstellung einer Fußbodenheizung eingebracht werden müssen, stellen diese Vorrichtungen eine enorme Kraftbeanspruchung für den Monteur dar. Außerdem werden die Tackernadeln in Abhängigkeit vom Bediener nicht gleichmäßig und mit einem definierten Kraftaufwand eingeschlagen. Dabei kann es auch zur Zerstörung des Isolationsuntergrundes und/oder der Clipse bzw. Klammern selbst kommen, oder auch zu einer unzureichenden Verankerung.

Die Aufgabe der Erfindung besteht deshalb darin, die aus dem Stand der Technik bekannten Vorrichtungen zu verbessern. Die erfindungsgemäße Vorrichtung soll dabei die Befestigung der Rohre mit Clipsen bzw. Klammern auf einem Isolationsuntergrund für den Monteur mit einem geringeren Kraftaufwand ermöglichen. Zum Einschlagen der Clipse bzw. Klammern soll dabei zudem durch die Vorrichtung eine annähernd konstante und definierte Kraft zur Verfügung gestellt werden.

Erfindungsgemäß wird diese Aufgabe durch die Merkmale des Anspruchs 1 gelöst. Vorteilhafte Weiterbildungen der Erfindung sind in den zugeordneten Ansprüchen enthalten. Die vorliegende Erfindung beinhaltet demnach eine Vorrichtung zum Fixieren von Rohren oder ähnlichen Gegenständen auf einem Untergrund, welche ein Gehäuse, in welchem ein Magazinhalter zur Magazinierung von Halteklammern sowie ein Schieber zur Abtrennung und Ausgabe der Halteklammern integriert sind, umfasst. Der Schieber ist dabei über ein Betätigungselement mit Handgriff zum Fixieren der Rohre mittels der Halteklammern aktivierbar.
Erfindungsgemäß ist nunmehr ein System zur Speicherung der über den Handgriff auf das Betätigungselement ausgeübten Kraft vorgesehen, welches mit einem im Gehäuse oberhalb des Schiebers integrierten Rückhaltesystem in einem funktionellen Zusammenhang steht. Dabei ist über das Rückhaltesystem eine auf das Betätigungselement und den damit verbundenen Schieber wirkende Rückhaltekraft einstellbar, wobei der Schieber bei Überwindung der Rückhaltekraft aktivierbar ist. Vorzugsweise umfasst dabei das System zur Speicherung der über den Handgriff auf das Betätigungselement ausgeübten Kraft eine Feder.

Nach einer Ausführung der Erfindung ist der Handgriff mit einem Rohr zur freien Aufnahme und Führung des oberen Endes des Betätigungselementes verbunden, wobei im Gehäuse oberhalb des Schiebers ein Rückhaltesystem integriert ist, welches zur Ausübung einer Rückhaltekraft auf den Schieber mit dem Betätigungselement in einem funktionellen Zusammenhang steht. Vorteilhaft besteht dabei zwischen dem Betätigungselement und dem unmittelbar mit dem Handgriff verbundenen Rohrabschnitt keine starre Verbindung. Der obere Abschnitt des Betätigungselementes ragt dabei in den Rohrabschnitt hinein. Beim Niederdrücken des Handgriffs taucht der obere Abschnitt des Betätigungselementes weiter in das Innere des Rohrabschnitts, wobei sich das Betätigungselement noch nicht relativ zum Gehäuse bewegt, stattdessen wird eine Feder gestaucht bzw. es werden äquivalent dazu wirkende Mittel zur Kraftspeicherung verwendet.

Je weiter der Handgriff niedergedrückt wird, desto stärker wird die auf den Angriffspunkt der Feder ausgeübte Kraft, unabhängig davon, mit welcher Geschwindigkeit der Handgriff niedergedrückt wird.
Erst bei Erreichen einer über das Rückhaltesystem einstellbaren definierten Kraft wird die Bewegung des Betätigungselementes durch das Rückhaltesystem freigegeben und es erfolgt durch den mit dem Betätigungselement verbundenen Schieber ein Hub zum Einschlagen der Halteklammer.
Dadurch können die Rohre für eine Fußbodenheizung auf einer Dämmung oder Isolationsunterlage mit vorzugsweise u-förmig gebogenen Klammern, Clips oder Tackernadeln mit einer konstanten und definierten Kraft sowie ausreichender Verankerung befestigt werden.
Vorteilhaft weist die Betätigungsstange dafür eine zwischen zwei Angriffspunkten gelagerte Feder auf. Das Haltesystem umfasst federgelagerte Gleit- oder Wälzlager oder starre Rastelemente, die radial um dass Betätigungselement angeordnet sind, wobei das Betätigungselement mit Aussparungen versehen ist, die mit den Rastelementen einen Formschluss ermöglichen. Die Gleit- oder Wälzlager sind dabei vorteilhaft mit jeweils einer Druckfeder verbunden und mittels Gewindestifte im Gehäuse befestigt. Vorteilhaft ist dabei vorgesehen, dass die Kraft ab dem das Haltesystem durch Energieentladung der Feder zur Betätigung des Schiebers auslöst durch die Einschraubtiefe der Gewindestifte die auf diese Druckfeder drücken, einstellbar ist.
Zum Umfang der Erfindung gehört auch, dass das Rückhaltesystem und das System zur Kraftspeicherung durch äquivalent wirkende Mechanismen wie Magnete oder Gasdruckdämpfer sowie Kombinationen davon ausgebildet werden kann.
Nach einem besonderen Merkmal der Erfindung ist deshalb vorgesehen, dass das Haltesystem einen Magneten umfasst, dessen (+) Pol auf das Betätigungselement und einen darin integrierten weiteren Magneten gerichtet ist, dessen (-) Pol auf das Rückhaltesystem gerichtet, eingelassen ist.

Nach einem weiteren Merkmal der Erfindung ist vorgesehen, dass das Betätigungselement durch ein Rückhaltesystem gehalten wird, wobei das Haltesystem ein in das Betätigungselement eingreifendes Rastelement umfasst und mit einer am Handgriff befestigten Auslösevorrichtung in einer Wirkverbindung steht. Dabei ist vorgesehen, dass das durch das Rastelement verriegelte Betätigungselement durch die über den Handgriff aktivierbare Auslösevorrichtung entriegelbar ist.
Nach einem besonderen Merkmal ist vorgesehen, dass das Rohr als ein Gasdruckdämpfer ausgebildet ist und das Betätigungselement als Kolben des Gasdruckdämpfers arbeitet. Dabei umfasst das Haltesystem mit Gleit- oder Wälzlagern verbundene weitere Gasdruckdämpfer, die radial um das Betätigungselement angeordnet sind. Das Betätigungselement weist Aussparungen auf, die mit den Gleit- oder Wälzlagern dieser Gasdruckdämpfer einen Formschluss ermöglichen.
Nach einer weiteren Variante der Erfindung ist vorgesehen, dass das Rückhaltesystem mindestens zwei im Gehäuse schwenkbar gelagerte Gasdruckdämpfer aufweist, die beweglich mit dem Betätigungselement verbunden sind.

Nachfolgend wird die Erfindung in Ausführungsbeispielen anhand von Zeichnungen näher beschrieben.
In den Zeichnungen zeigen:
- Fig. 1:: eine Frontansicht der erfindungsgemäßen Vorrichtung,
- Fig. 2:: eine Seitenansicht der erfindungsgemäßen Vorrichtung,
- Fig. 3, 3a:: eine Detailansicht (Schnittdarstellung) der erfindungsgemäßen Vorrichtung,
- Fig. 4:: eine Detailansicht zu einer anderen Ausführungsform des Rückhaltesystems,
- Fig. 5:: eine Detailansicht zu einer weiteren Ausführungsform des Rückhaltesystems,
- Fig. 5a:: eine Detailansicht zum Rohr 5.1, der Variante nach Fig. 5,
- Fig. 6:: eine Detailansicht zu einer weiteren Ausführungsform des Rückhaltesystems,
- Fig. 7:: eine Detailansicht zu einer weiteren Ausführungsform des Rückhaltesystems
- Fig. 7a:: eine Detailansicht zur Variante nach Fig. 7,
- Fig. 8:: eine Detailansicht zu einer anderen Ausführungsform des Rückhaltesystems auf der Basis von Gasdruckdämpfern,
- Fig. 8a, 8b:: Funktionsweise zur Variante nach Fig. 8.

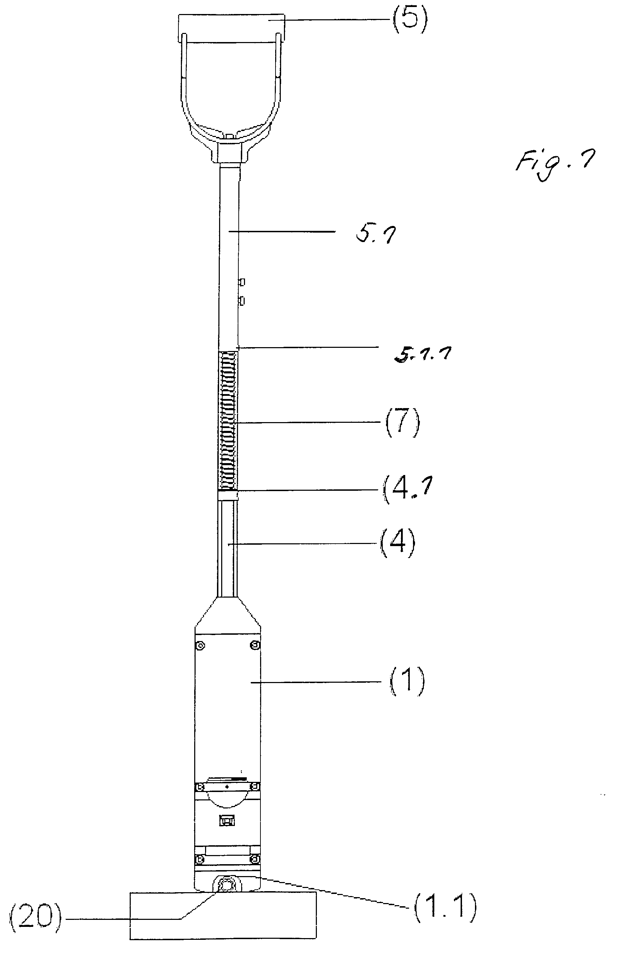

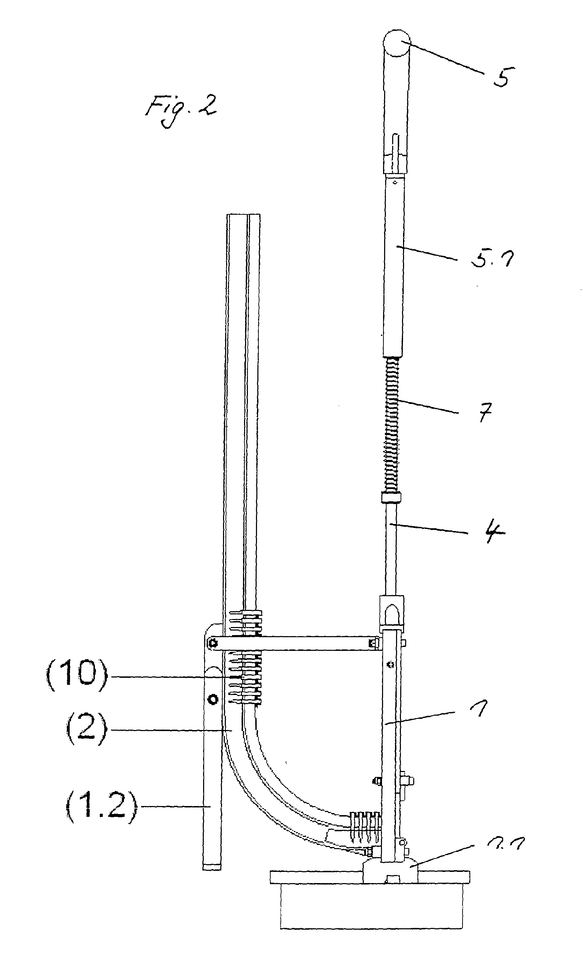

Wie den Fig. 1 bis 3 zu entnehmen ist besteht die Vorrichtung aus einem Gehäuse 1, in welchem das Abgabeende eines Magazinhalters 2 für die Magazinierung der Klammern 10 und ein Schieber 3 zur Abtrennung und Ausgabe der Klammern integriert sind. Der Schieber 3 wird über ein Betätigungselement 4 und den Handgriff 5 aktiviert. Das Gehäuse 1 weist an seiner Unterseite eine Rohrführung 1.1 auf. Weiterhin sind mit dem Gehäuse 1 verbundene seitliche Auflagestützen 1.2 vorgesehen. Die Vorrichtung wird mittels der seitlichen Auflagestützen 1.2 über ein Rohr 20 platziert und durch die Rohrführung 1.1 fixiert.
Zwischen dem Betätigungselement 4 und dem unmittelbar mit dem Handgriff 5 verbundenen Rohr 5.1 besteht dabei keine starre Verbindung. Das Rohr 5.1 dient zur freien Aufnahme und Führung des oberen Endes des Betätigungselementes 4, welches in das Innere des Rohrabschnitts 5.1 hineinragt.
Beim Niederdrücken des Handgriffs 5 taucht der obere Abschnitt des Betätigungselementes 4 weiter in das Innere des Rohrabschnitts 5.1. Dabei bewegt sich das Betätigungselement 4 relativ zum Gehäuse 1 noch nicht. Stattdessen wird dabei im Fall der Fig. 1 bis 3 die Feder 7 gestaucht, die zwischen den Angriffspunkten 5.1.1 und 4.2 gelagert ist. Der obere Angriffspunkt 5.1.1 ist dabei Teil des Rohrabschnitts 5.1 und der Angriffspunkt 4.1 Teil des Betätigungselementes 4. Je weiter der Handgriff 5 niedergedrückt wird, desto stärker wird die von der Feder 7 auf den Angriffspunkt 4.1 ausgeübte Kraft, und zwar unabhängig davon, mit welcher Geschwindigkeit der Handgriff 5 niedergedrückt wird.
Erst bei Erreichen einer einstellbaren definierten Kraft wird die Bewegung des Betätigungselementes 4 durch das Haltesystem 6 freigegeben und es erfolgt durch den mit dem Betätigungselement 4 verbundenen Schieber 3 ein Tackerhub.
Bis zum Erreichen dieser Kraft wird demnach der untere Teil des Betätigungselementes 4 durch ein im Gehäuse 1 angeordnetes Rückhaltesystem 6 fixiert. Das Rückhaltesystem 6 ist vorteilhaft im Gehäuse 1 zwischen Schieberführung und Oberkante des Gehäuses angeordnet. Bei Erreichen einer definierten Kraft auf das Rückhaltesystem 6 wird der Schieber 3 über das Betätigungselement 4 nach unten geschlagen, wobei der zum Einschlagen der Tackernadel 10 erforderliche Impuls erzeugt wird.

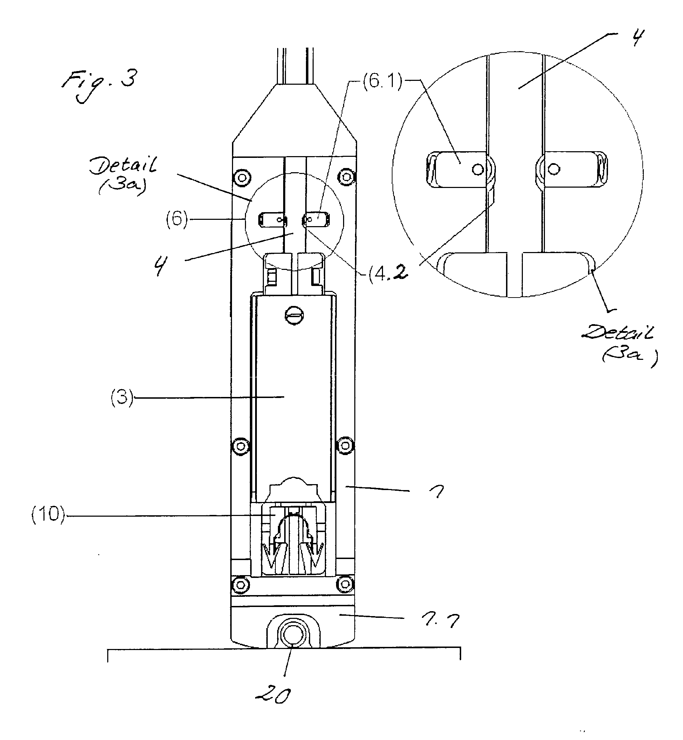

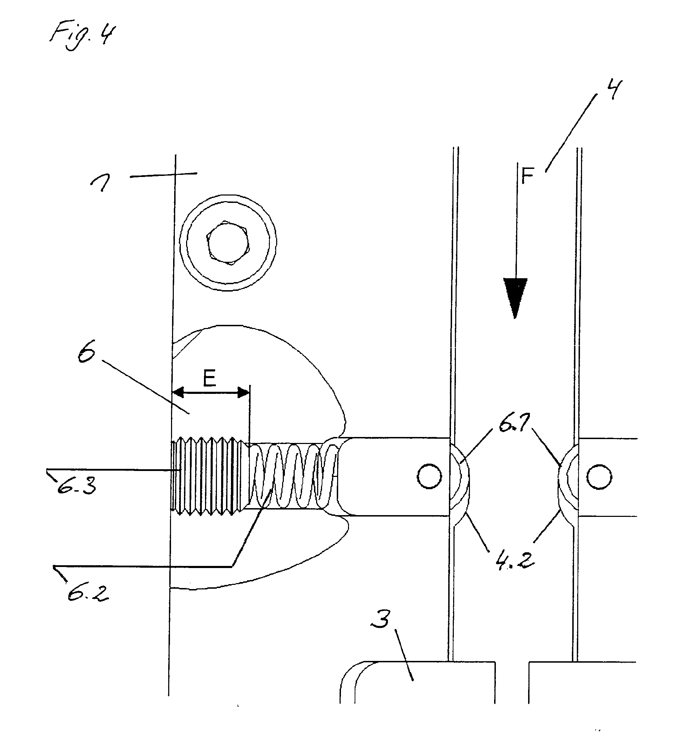

Die Feder wird demnach durch Krafteinwirkung des Monteurs vorgespannt. Diese gespeicherte Kraft drückt auf das im Gehäuse 1 angeordnete und auf das Betätigungselement 4 wirkende Haltesystem 6, welches mittels Formschluss ein Auslösen des Schiebers 3 verhindert. Der Formschluss mit dem Betätigungselement 4 kann durch bewegliche Lager (federgelagerte Kugellager) oder starre Rastelemente erreicht werden. Wie aus den Fig. 3, 3a und 4 ersichtlich umfasst das Haltesystem 6 vorzugsweise Gleit- oder Wälzlager 6.1, welche mit einer Druckfeder 6.2 verbunden sind und mittels Gewindestiftes 6.3 im Gehäuse 1 befestigt sind. Das Betätigungselement 4 weist Aussparungen 4.2 auf, die mit den Gleit- oder Wälzlagern 6 den Formschluss ermöglichen. Durch die Einschraubtiefe E des Gewindestiftes 6.3 der auf die Druckfeder 6.2 drückt, kann die Kraft ab dem das Rückhaltesystem 6 auslöst eingestellt werden. Die Kraft der vorgespannten Feder 7 drückt auf die Verriegelung des Betätigungselementes 4 durch das Rückhaltesystem 6 und erhöht sich proportional zum Weg, welcher beim Vorspannen zurückgelegt wird. Dabei wirken die Kräfte auf das Rückhaltesystem wie bei einem Keil. Wird eine definierte Kraft überschritten, wird die Kraft zur Verriegelung des Haltesystems (z.B. Federkraft) überwunden. Die Rastelemente werden weggedrückt, wobei ein impulsartiger Schlag auf den Schieber 3 wirkt, der die Klammern 10 aus dem Magazinhalter 2 abtrennt und über das Rohr 20 in der Dämmschicht (nicht dargestellt) fixiert ohne dabei das Rohr zu beschädigen. Nach Beendigung des Vorgangs wird der Griff 5 wieder nach oben bewegt.

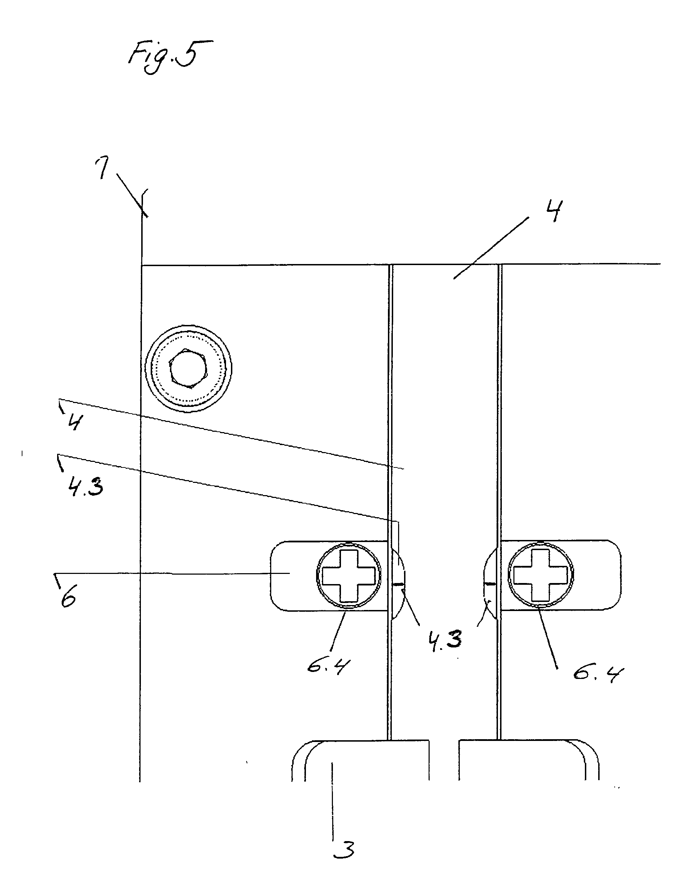

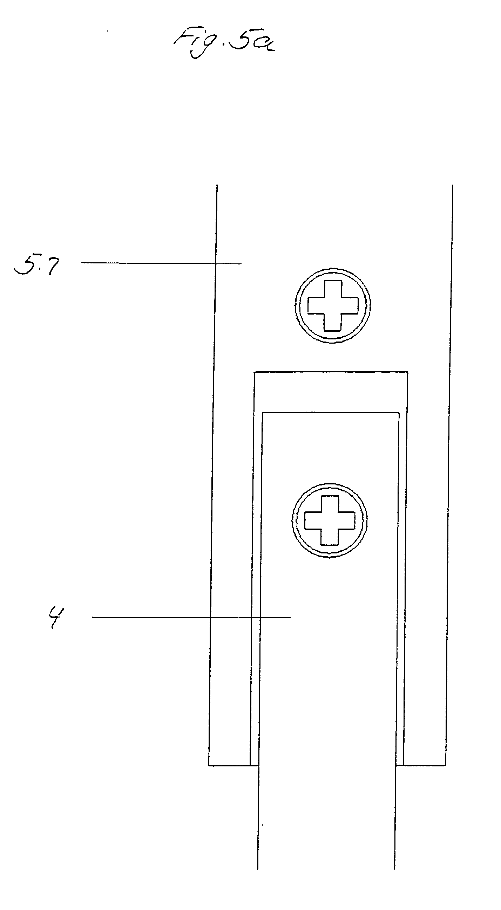

Das Rückhaltesystem kann auch durch äquivalent wirkende Mittel, die beispielsweise Magnete oder Gasdruckdämpfer umfassen, ausgebildet sein. Auch Kombinationen dieser Mittel, sowohl in Bezug auf das Rückhaltesystem, als auch auf das System zur Speicherung der auf das Betätigungselement aufgebrachten Kraft, gehören zum Umfang der Erfindung.
Bei der auf Magneten basierenden Ausgestaltung des Rückhaltesystems (Fig. 5 und 5a) ziehen sich zwei gegensätzliche Magnetpole an. Da die Anziehungskraft exponentiell mit dem Abstand der beiden Pole abnimmt ist diese Lösung auch für das erfindungsgemäße Halte- bzw. Rückhaltesystem geeignet. Im Gehäuse 1 ist das Haltesystem 6 angeordnet, welches den (+) Pol eines Magneten 6.4 auf die Betätigungsstange 4 richtet. Das Betätigungselement 4 weist in diesem Bereich einen Magneten 4.3 auf, welcher mit dem (-) Pol nach außen gerichtet, d.h. auf das Haltesystem 6 weisend eingelassen ist. Wird nun eine bestimmte Kraft auf das Betätigungselement 4 überschritten können die Magnete 6.4 und 4.3 die Haltekraft nicht mehr erbringen. Nun löst das Rückhaltesystem 6 aus. Die Rückhaltekraft der Magnete nimmt dabei exponential mit dem Abstand der unterschiedlichen Pole ab. Das Betätigungselement 4 und der Rohrabschnitts 5.1 sind dabei gleich gepolt (Fig. 5a) und stoßen sich somit gegenseitig ab und können damit statt der im ersten Ausführungsbeispiel beschriebenen Feder 7 eingesetzt werden. Auch Kombinationen dieser Mittel sind möglich.

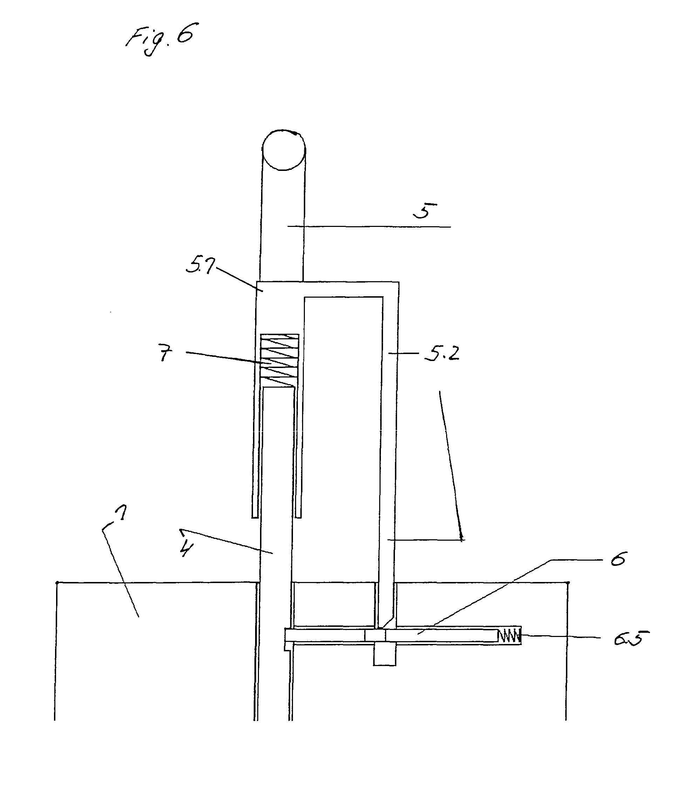

Alternativ dazu gehört auch eine weggesteuerte Variante zum Umfang der vorliegenden Erfindung, die in der Fig. 6 dargestellt ist.
Dabei wird das Betätigungselement 4 durch das Rückhaltesystem 6 gehalten, bis mit der Auslösevorrichtung 5.2, welche am Rohrabschnitt 5.1 des Handgriffs 5 befestigt ist, ein bestimmter Weg zurück gelegt wurde und somit das Betätigungselement 4 entriegelt. Die Feder 7 wird bis zur Entriegelung gestaucht. Danach entlädt die Feder 7 ihre Energie und drückt das Betätigungselement 4 nach unten. Die Rückstellung des Haltesystems 6 kann dabei durch eine Feder 6.5 erfolgen.

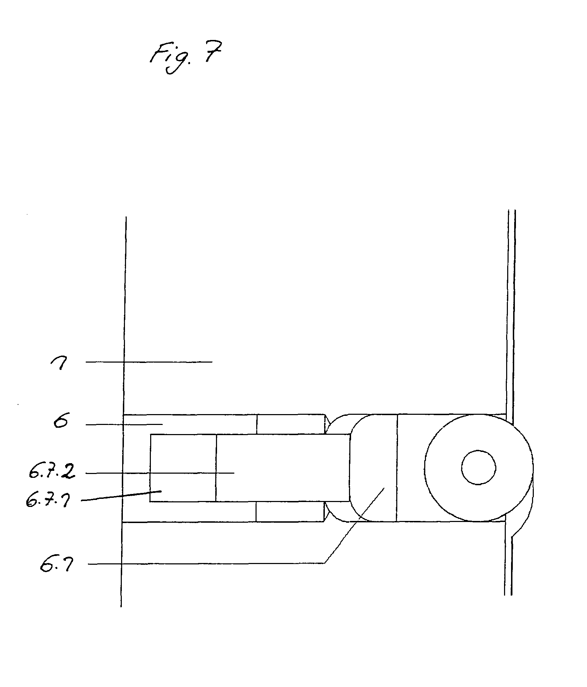

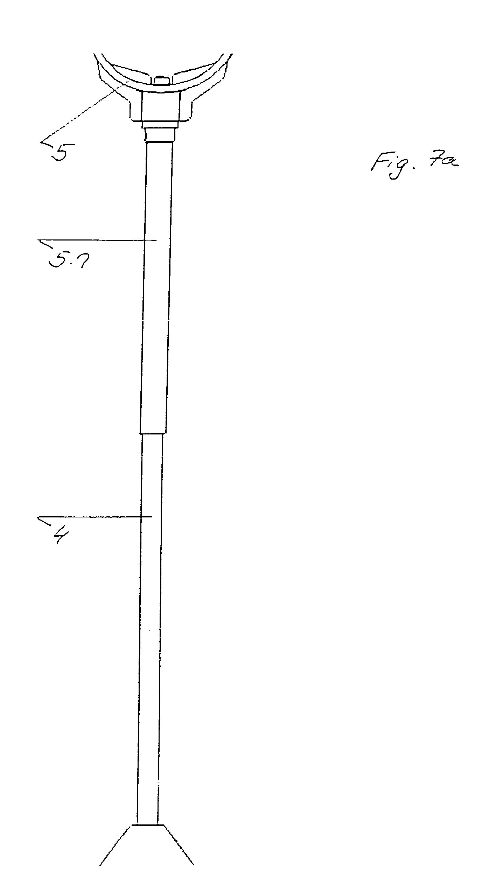

In den Fig. 7 bis 8 werden weitere Varianten der Erfindung beschrieben, wobei die Wirkungsweise von Gasdruckdämpfern Anwendung findet.

Dabei werden im Gegensatz zum ersten Ausführungsbeispiel die Rückhalteelemente 6.1 statt durch Druckfedern 6.2 mit Hilfe von Gasdruckdämpfern 6.7 in die Aussparung 4.2 des Betätigungselementes 4 gedrückt. Dabei wird der im Zylinder 6.7.1 befindliche Kolben 6.7.2 durch Gasdruck auf die Rückhalteelemente 6.1 gedrückt.
Das am Handgriff 5 befestigte Rohr 5.1 ist dabei ebenfalls als Gasdruckdämpfer ausgebildet, wobei das Betätigungselement 4 wie ein Kolben im als Zylinder des Gasdruckdämpfers wirkenden Rohrabschnitt 5.1 läuft. Hierbei wird statt einer Feder das Gas im Inneren des Zylinders komprimiert.

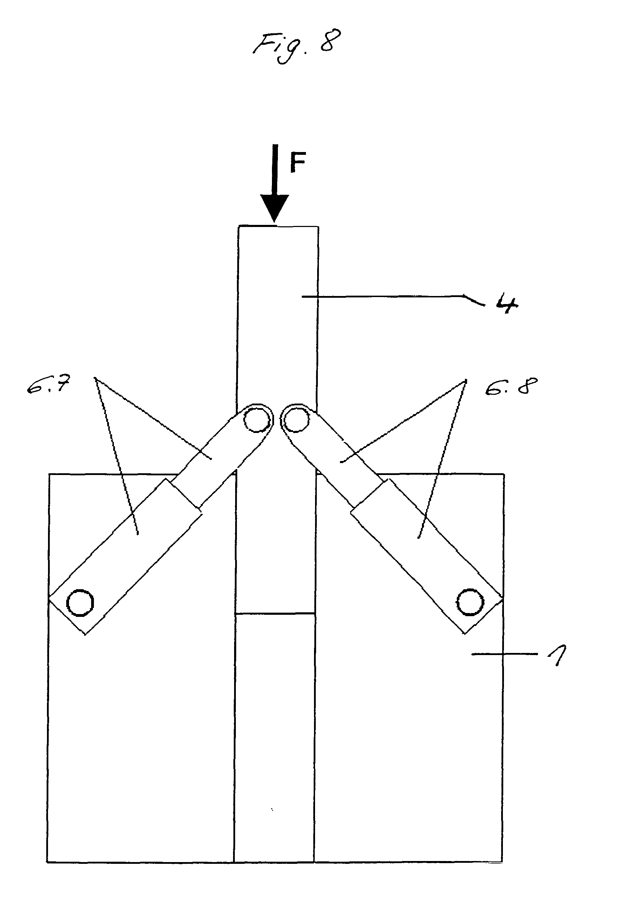

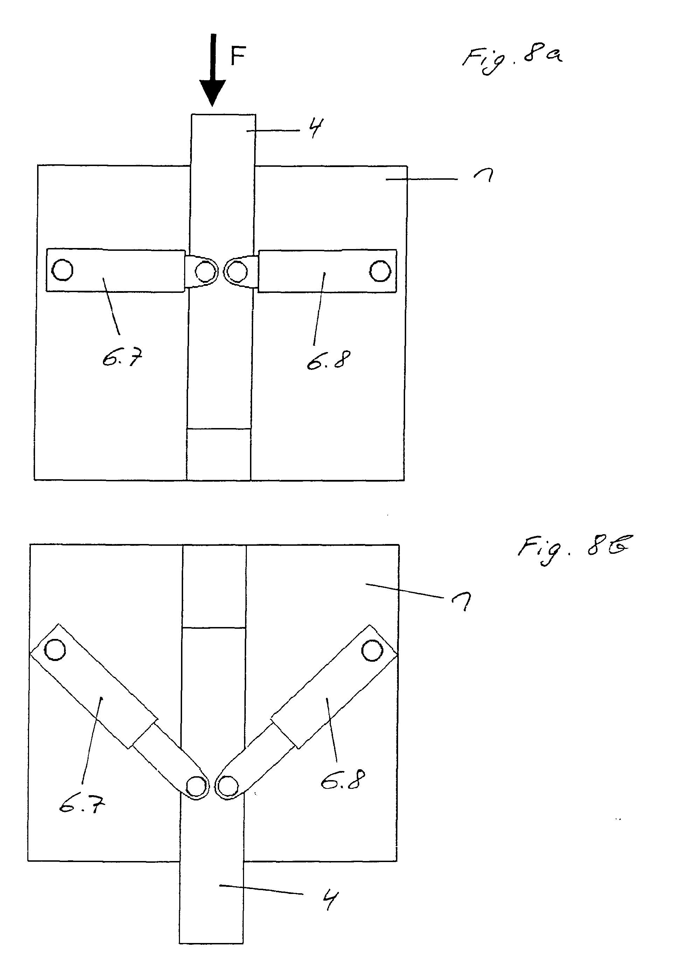

Die Fig. 8, 8a und 8b zeigen eine weitere Variante für den Einsatz von Gasdruckdämpfern. Dabei wird ein Betätigungselement 4 manuell mit einer Kraft F beaufschlagt. Dadurch werden die schwenkbar gelagerten Gasdruckdämpfer 6.7, 6.8 eingefahren und somit die Kolben unter Druck gesetzt (Fig.8). Überschreiten die Gasdruckdämpfer 6.7, 6.8 in Bezug auf ihre Lage im Gehäuse 1 einen bestimmten Winkel (Fig. 8a), wirkt die vorher aufgebrachte Kraft zum Einfahren der Kolben nun in dieselbe Richtung wie die des Anwenders (Fig.8b).

## Patentansprüche

1. Vorrichtung zum Fixieren von Rohren oder ähnlichen Gegenständen auf einem Untergrund, umfassend ein Gehäuse (1), in welchem ein Magazinhalter (2) zur Magazinierung von Halteklammern (10) sowie ein Schieber (3) zur Abtrennung und Ausgabe der Halteklammern (10) integriert sind, wobei der Schieber (3) über ein Betätigungselement (4) mit Handgriff (5) zum Fixieren der Rohre mittels der Halteklammern (10) aktivierbar ist, **dadurch gekennzeichnet, dass** ein System zur Speicherung der über den Handgriff (5) auf das Betätigungselement (4) ausgeübten Kraft vorgesehen ist, welches mit einem im Gehäuse (1) oberhalb des Schiebers (3) integrierten Rückhaltesystem (6) in einem funktionellen Zusammenhang steht, wobei über das Rückhaltesystem (6) eine auf das Betätigungselement (4) und den damit verbundenen Schieber (3) wirkende Rückhaltekraft einstellbar ist und der Schieber (3) bei Überwindung der Rückhaltekraft aktivierbar ist.

2. Vorrichtung nach Anspruch 1, **dadurch gekennzeichnet, dass** das System zur Speicherung der über den Handgriff (5) auf das Betätigungselement (4) ausgeübten Kraft eine Feder umfasst.

3. Vorrichtung nach den Ansprüchen 1 und 2, **dadurch gekennzeichnet, dass** der Handgriff (5) mit einem Rohr (5.1) zur freien Aufnahme und Führung des oberen Endes des Betätigungselementes (4) verbunden ist, und das Betätigungselement (4) zwischen den Angriffspunkten (5.1.1) und (4.1) eine Feder (7) aufweist, wobei das Rückhaltesystem (6) bewegliche Lager (federgelagerte Gleit- oder Wälzlager) oder starre Rastelemente (6.1) umfasst, die radial um das Betätigungselement (4) angeordnet sind, wobei das Betätigungselement (4) Aussparungen (4.2) aufweist, die mit den Lagern oder Rastelementen (6.1) einen Formschiuss ermöglichen.

4. Vorrichtung nach den Ansprüchen 1 bis 3, **dadurch gekennzeichnet, dass** das Rückhaltesystem (6) mindestens ein Gleit- oder Wälzlager (6.1) umfasst, welches mit einer Druckfeder (6.2) verbunden ist und mittels eines Gewindestiftes (6.3) im Gehäuse 1 befestigt ist.

5. Vorrichtung nach den Ansprüchen 1 bis 4, **dadurch gekennzeichnet, dass** die Kraft ab der das Rückhaltesystem (6) durch Energieentladung der Feder (7) zur Betätigung des Schiebers (3) auslöst durch die Einschraubtiefe (E) des Gewindestiftes (6.3), der auf die Druckfeder (9) drückt, einstellbar ist.

6. Vorrichtung nach Anspruch 1, **dadurch gekennzeichnet, dass** das Rückhaltesystem (6) und das System zur Speicherung der über den Handgriff (5) auf das Betätigungselement (4) ausgeübten Kraft durch die Anordnung äquivalent wirkender Mittel wie Magnete oder Gasdruckdämpfer und/oder Kombinationen davon ausbildbar sind.

7. Vorrichtung nach den Ansprüchen 1 und 6, **dadurch gekennzeichnet, dass** das Rückhaltesystem (6) einen Magneten (6.4) umfasst, dessen (+) Pol auf das Betätigungselement (4) und einen darin integrierten Magneten (4.3) gerichtet ist, dessen (-) Pol auf das Rückhaltesystem (6) gerichtet, eingelassen ist.

8. Vorrichtung nach Anspruch 7, **dadurch gekennzeichnet, dass** das Betätigungselement (4) und der Rohrabschnitts (5.1) gleich gepolt sind und sich gegenseitig abstoßen.

9. Vorrichtung nach den Ansprüchen 1 und 6, **dadurch gekennzeichnet, dass** das Betätigungselement (4) durch das Rückhaltesystem (6) gehalten wird, wobei das Rückhaltesystem (6) ein in das Betätigungselement (4) eingreifendes Rastelement (6.5) umfasst und mit einer Auslösevorrichtung (6.6), welche am Handgriff (5) befestigt ist in einer Wirkverbindung steht.

10. Vorrichtung nach Anspruch 9, **dadurch gekennzeichnet, dass** das durch das Rastelement (6.5) verriegelte Betätigungselement (4) durch die über den Handgriff (5) aktivierbare Auslösevorrichtung (6.6) entriegelbar ist.

11. Vorrichtung nach den Ansprüchen 1 und 6, **dadurch gekennzeichnet, dass** das Rohr (5.1) als Gasdruckdämpfer ausgebildet ist und das Betätigungselement (4) als Kolben des Gasdruckdämpfers arbeitet, wobei das Haltesystem (6) mit Gleit- oder Wälzlagern (6.1) verbundene Gasdruckdämpfer (6.7) umfasst, die radial um das Betätigungselement (4) angeordnet sind, wobei das Betätigungselement (4) Aussparungen (4.2) aufweist, die mit den Gleit- oder Wälzlagern (6.1) der Gasdruckdämpfern (6.7) einen Formschluss ermöglichen.

12. Vorrichtung nach den Ansprüchen 1 und 6, **dadurch gekennzeichnet, dass** das Haltesystem (6) mindestens zwei schwenkbar gelagerte Gasdruckdämpfer (6.7, 6.8) aufweist, die beweglich mit dem Betätigungselement (4) verbunden sind.
